# EUROPÄISCHE PATENTSCHRIFT

(11) **EP 0 990 476 B1**
(45) Veröffentlichungstag und Bekanntmachung des Hinweises auf die Patenterteilung: **04.08.2004**
(21) Anmeldenummer: 99114914.7
(22) Anmeldetag: 30.07.1999
(51) Int. Cl.: B23B 27/04

(54) **Wendeschneidplatte**
Indexable cutting insert
Plaquette de coupe indexable

(30) Priorität: 30.09.1998 DE 19844858
(43) Veröffentlichungstag der Anmeldung: 05.04.2000
(73) Patentinhaber: KARL-HEINZ ARNOLD GmbH, 73760 Ostfildern (DE)
(72) Erfinder: Arnold, Klaus-Michael, 73760 Ostfildern (DE)
(74) Vertreter: Reimold, Otto, Dr. Dipl.-Phys.

(56) Entgegenhaltungen:
- EP-A- 0 416 854
- PATENT ABSTRACTS OF JAPAN vol. 002, no. 146 (M-042), 6. Dezember 1978 (1978-12-06) & JP 53 114588 A (MITSUBISHI METAL CORP), 6. Oktober 1978 (1978-10-06)

## Beschreibung

Die Erfindung betrifft eine an einem Werkzeughalter zwischen einer im Querschnitt satteldachartig winkelig vertieften Auflagefläche und einem Klemmteil in zwei umgekehrten Gebrauchslagen festspannbare Wendeschneidplatte länglicher Gestalt zum spanabhebenden Bearbeiten eines Werkstücks durch Einstechen mittels einer stirnseitigen Schneide, mit einer Mittelpartie und zwei gleichen, in Längsrichtung beiderseits der Mittelpartie angeordneten und um eine in Längsrichtung verlaufende Längsachslinie der Schneidplatte verdreht zueinander an die Mittelpartie angesetzten Schneidköpfen, von denen in jeder Gebrauchslage einer wirksam und einer unwirksam ist, und mit zwei sich in Längsrichtung über die Mittelpartie und jeweils einen Schneidkopf erstreckenden Spannflächenpaaren an der Außenseite der Schneidplatte, die in Umfangsrichtung einander benachbart und um einen dem Drehwinkel zwischen den beiden Schneidköpfen entsprechenden Drehwinkel um die Längsachslinie versetzt zueinander sind und jeweils von zwei der winkeligen Auflagefläche entsprechend winkelig zueinander angeordneten Spannflächen gebildet werden, so daß die Schneidplatte in ihren Gebrauchslagen mit dem den jeweils wirksamen Schneidkopf erfassenden Spannflächenpaar auf die winkelige Auflagefläche des Werkzeughalters setzbar ist, wobei an den Schneidköpfen die jeweilige stirnseitige Schneide im wesentlichen quer zur Winkelhalbierenden des zugehörigen Spannflächenpaares verläuft und die Mittelpartie an jeweils einem Spannflächenpaar entgegengesetzten Stellen für den Angriff des Klemmteils ausgebildet ist.

Beim Einstechen einer Nut in ein rotierendes Werkstück darf der sich an den wirksamen, mit seiner stirnseitigen Schneide das Einstechen ausführende Schneidkopf anschließende Bereich der Schneidplatte die Nutwände nicht berühren. Daher wird bei vielen Wendeschneidplatten die Einstechtiefe durch den Abstand zwischen den beiden Schneidköpfen begrenzt.

Aus der EP 0 150 901 A3 ist jedoch bereits eine Wendeschneidplatte der eingangs genannten Art bekannt, bei der die beiden Schneidköpfe eine um 90° gegeneinander verdrehte Lage einnehmen, so daß der jeweils unwirksame Schneidkopf seitlich weniger weit als der wirksame Schneidkopf vorsteht. Beim Einstechen in radialer Richtung des Werkstücks kann die am Werkstückumfang umlaufende Nut daher so tief in das Werkstück eingearbeitet werden, daß auch der unwirksame Schneidkopf in die Nut eingreift. Gleiches gilt beim axial gerichteten Einstechen einer Ringnut an der Stirnseite eines Werkstücks, falls es sich um eine Nut mit ausreichend großem Radius, d.h. um einen genügend großen radialen Abstand der Schneidplatte vom Rotationszentrum des Werkstücks handelt. Beim axialen Einstechen von Nuten mit kleinerem Radius paßt bei der bekannten Wendeschneidplatte der unwirksame Schneidkopf dagegen nicht in die Nut, so daß nur eine bis zum unwirksamen Schneidkopf reichende Nuttiefe erzielt werden kann.

Der vorliegenden Erfindung liegt daher die Aufgabe zugrunde, eine Wendeschneidplatte der eingangs genannten Art zu schaffen, bei der der jeweils unwirksame Schneidkopf nicht nur ein radiales Einstechen sondern auch ein axiales Einstechen - und hier auch bei verhältnismäßig kleinem Radius der stirnseitigen Werkstücknut - bis in eine den unwirksamen Schneidkopf aufnehmende Tiefe zuläßt.

Diese Aufgabe wird erfindungsgemäß dadurch gelöst, daß die Schneidköpfe, ausgehend vom jeweils zugeordneten Spannflächenpaar, eine mit Bezug auf den Durchmesser der Mittelpartie kleinere Höhenabmessung aufweisen und daß der Drehwinkel zwischen den beiden Schneidköpfen und somit auch der Drehwinkel zwischen den beiden Spannflächenpaaren im wesentlichen 135° und bei jedem Spannflächenpaar der Winkel zwischen den beiden Spannflächen im wesentlichen 90° beträgt, so daß in Längsrichtung gesehen von jedem Spannflächenpaar die dem jeweils anderen Spannflächenpaar in Umfangsrichtung zugewandte Spannfläche im wesentlichen rechtwinkelig und die dem jeweils anderen Spannflächenpaar abgewandte Spannfläche im wesentlichen parallel zur stirnseitigen Schneide des dem anderen Spannflächenpaar zugeordneten Schneidkopfes angeordnet ist, wobei die einander abgewandten Spannflächen der beiden Spannflächenpaare jeweils einen Angriffsbereich für das Klemmteil bilden.

Mit den erfindungsgemäßen Maßnahmen läßt sich eine Wendeschneidplatte verwirklichen, die auch ein axiales Einstechen mit verhältnismäßig kleinem Nutradius ermöglicht, ohne daß der jeweils unwirksame Schneidkopf die Einstechtiefe beeinflußt. Dabei handelt es sich um konstruktiv und herstellungstechnisch verhältnismäßig einfache Maßnahmen, so daß die Gestehungskosten entsprechend niedrig gehalten werden.

Zweckmäßige Ausgestaltungen der Erfindung sind in den Unteransprüchen angegeben.

Ein Ausführungsbeispiel der Erfindung wird nun anhand der Zeichnung erläutert. Es zeigen:
- Figur 1: den vorderen Bereich eines Werkzeughalters mit einer eingespannten Wendeschneidplatte in teilweise gemäß der Schnittlinie I-I in Figur 2 geschnittener Seitenansicht,
- Figur 2: den Werkzeughalter nach Figur 1 ohne die Wendeschneidplatte in Draufsicht gemäß Pfeil II,

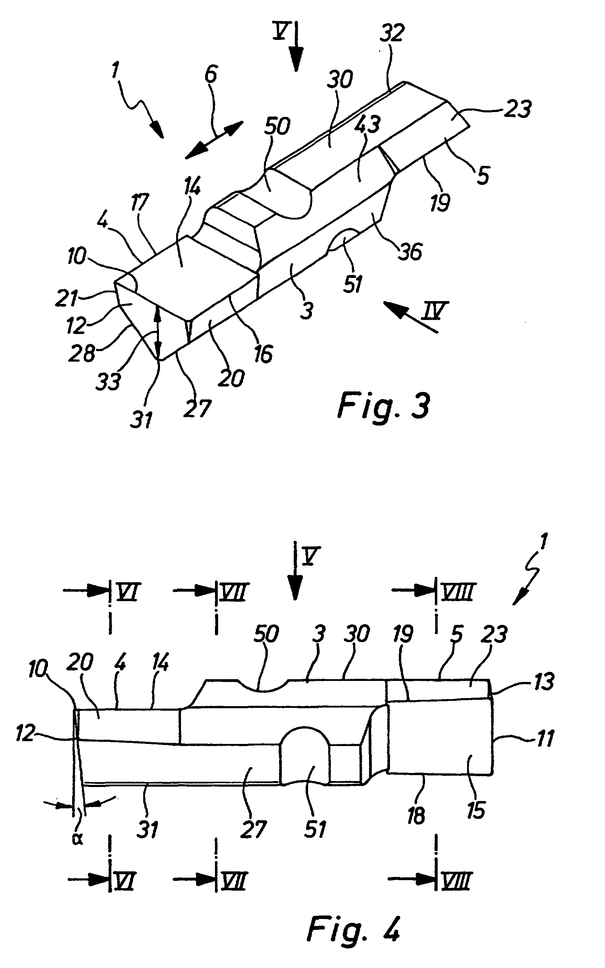

- Figur 3: eine Ausführungsform der erfindungsgemäßen Wendeschneidplatte in Einzeldarstellung in schematischer Schrägansicht,
- Figur 4: die gleiche Wendeschneidplatte in der Figur 1 und dem Pfeil IV in den Figuren 3 und 5 entsprechender Seitenansicht,
- Figur 5: die Wendeschneidplatte nach den Figuren 3 und 4 in Draufsicht gemäß Pfeil V in den Figuren 3 und 4,
- Figur 6: die gleiche Wendeschneidplatte im durch einen der Schneidköpfe gelegten Querschnitt gemäß der Schnittlinie VI-VI, wobei zwei mit diesem Schneidkopf durch axiales Einstechen in ein Werkstück einformbare, nach entgegengesetzten Richtungen von der Schneidplatte abgehende Ringnuten strichpunktiert bzw. strichdoppelpunktiert angedeutet sind,
- Figur 7: die gleiche Wendeschneidplatte im durch die Mittelpartie gemäß der Schnittlinie VII-VII gelegten Querschnitt und
- Figur 8: wiederum die gleiche Wendeschneidplatte im Querschnitt durch den anderen Schneidkopf gemäß der Schnittlinie VIII-VIII.

Aus der Zeichnung geht eine aus Hartmetall bestehende Wendeschneidplatte 1 hervor, die an einem stabähnlichen Werkzeughalter 2 eingespannt werden kann. Dabei weist die Wendeschneidplatte 1 eine längliche Gestalt mit einer Mittelpartie 3 und zwei Schneidköpfen 4, 5 auf, die gleich ausgebildet und in Längsrichtung 6 der Schneidplatte 1 beiderseits der Mittelpartie 3 angeordnet sind und die Enden der Schneidplatte 1 bilden.

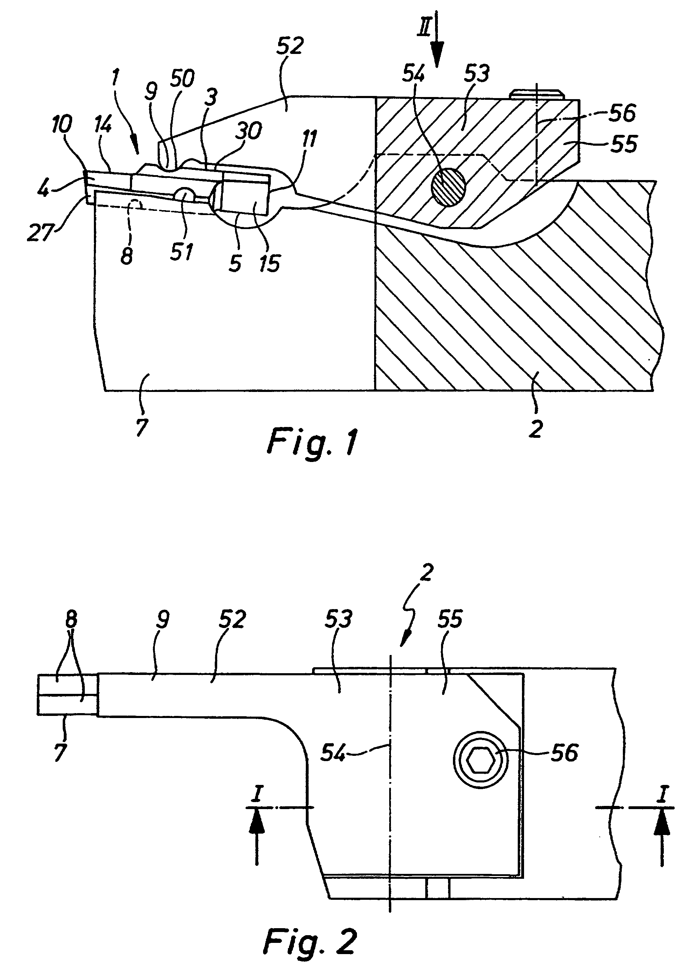

Der Werkzeughalter 2 weist an der Oberseite eines vorstehend an ihm angeordneten, mit Bezug auf die Schneidplatte 1 schmäleren Haltearms 7 eine in Arm-Längsrichtung verlaufende, im Querschnitt satteldachartig winkelig vertiefte Auflagefläche 8 auf, oberhalb der ein Klemmteil 9 am Werkzeughalter 2 angeordnet ist. Die Schneidplatte 1 wird zwischen der Auflagefläche 8 und dem Klemmteil 9 festgespannt, wobei zwei Gebrauchslagen möglich sind, in denen jeweils einer der beiden Schneidköpfe, der wirksame Schneidkopf, vorne angeordnet ist und dabei etwas vor den Werkzeughalter 2 bzw. dessen Haltearm 7 vorsteht, während sich der andere Schneidkopf, der unwirksame Schneidkopf, hinten befindet. In Figur 1 nimmt der Schneidkopf 4 die wirksame und der Schneidkopf 5 die unwirksame Lage ein. Kehrt man die Schneidplatte 1 um, wird der Schneidkopf 5 der wirksame Schneidkopf und der Schneidkopf 4 der unwirksame Schneidkopf. Wie noch beschrieben wird, muß die Schneidplatte 1 beim umgekehrten Einsetzen gleichzeitig noch um die Längsrichtung verdreht werden.

Jeder Schneidkopf 4, 5 weist eine stirnseitige, quer verlaufende Schneide 10 bzw. 11 auf, die am Übergang der Schneidkopf-Stirnseite 12 bzw. 13 zur mit Bezug auf die Mittelpartie 3 abgeflachten Schneidkopf-Oberseite 14 bzw. 15 ausgebildet ist. Die Schneidkopf-Stirnseite 12 bzw. 13 geht von der Schneide 10 bzw. 11 unter Bildung eines üblichen Freiwinkels α von beispielsweise 6° ab, so daß sie mit der Oberseite 14 bzw. 15 einen entsprechend kleineren Winkel als 90° einschließt. An der Schneidkopf-Oberseite 14 bzw. 15 kann eine nicht dargestellte Spanbrecheinrichtung ausgebildet sein. Die beiden Schneidkopfe 4, 5 verjüngen sich von der strinseitigen Schneide 10 bzw. 11 aus zur Mittelpartie 3 hin leicht, so daß die beiden von der stirnseitigen Schneide 10 bzw. 11 abgehenden Seitenkaten 16, 17 bzw. 18, 19, die die jeweilige Schneidkopf-Oberseite 14 bzw. 15 seitlich begrenzen, mit der Längsrichtung 6 einen Winkel β von beispielsweise 2° bilden. Die beiden beiderseits der Oberseite 14 bzw. 15 an den Seitenkanten 16, 17 bzw. 18, 19 zu der Oberseite entgegengesetzten Schneidkopf-Unterseite hin abgehenden und von der Stirnseite 12 bzw. 13 zur Mittelpartie verlaufenden Seitenflächen 20, 21 bzw. 22, 23 des jeweiligen Schneidkopfes 4 bzw. 5 laufen nicht nur dem Verlauf der Seitenkanten 16, 17 bzw. 18, 19 entsprechend zur Mittelpartie 3 hin sondern auch nach unten hin leicht aufeinander zu, so daß sie den Seitenkanten entlang ebenfalls einen üblichen Freiwinkel δ z.B. von 8°, d.h. mit der Oberseite 14 bzw. 15 einen Winkel kleiner als 90° bilden.

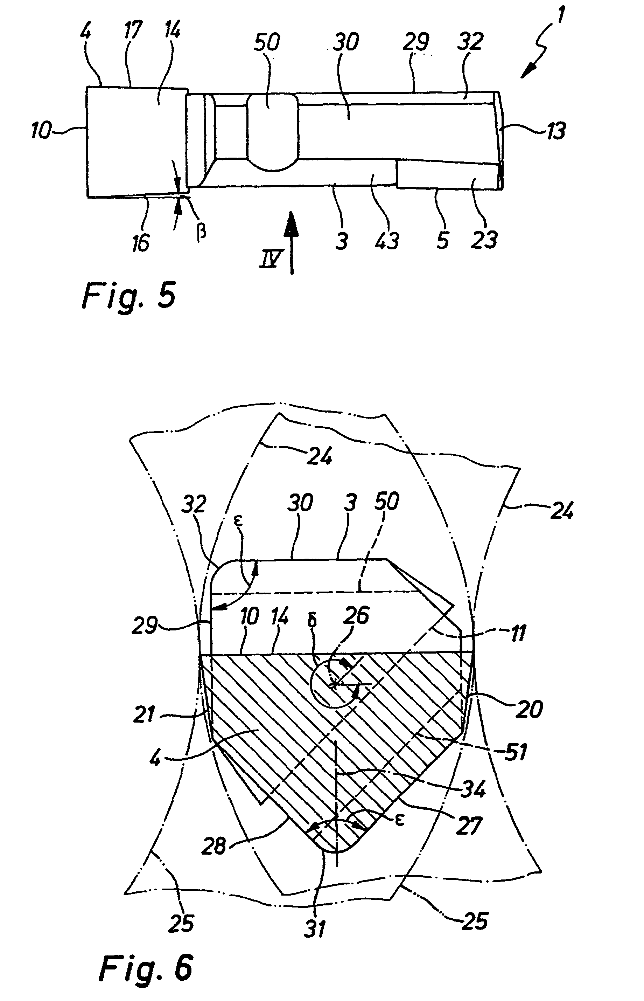

Im Querschnitt nach Figur 6 ist die Oberseite 14 des wirksamen Schneidkopfes 4 sichtbar. Da sich die stirnseitige Schneide 10 oberhalb der Zeichenebene praktisch an der gleichen Stelle befindet, wurde ihre Bezugsziffer 10 der Anschaulichkeit wegen auch in Figur 6 eingetragen.

Bewegt man den Werkzeughalter 8 mit der eingespannten Wendeschneidplatte 1 gegen ein rotierendes Werkstück, greift die stirnseitige Schneide 10 des wirksamen Schneidkopfes 4 spanabhebend am Werkstück an und sticht in dieses ein, so daß sich am Werkstück eine Nut ergibt. Dieses Einstechen kann in radialer oder in axialer Richtung des Werkstücks erfolgen. Im Falle eines radialen Einstechens ergibt sich am Werkstück eine am Umfang umlaufende Nut. Bei einem axialen Einstechen greift die stirnseitige Schneide 10 an der Werkstück-Stirnseite an, so daß eine um das Rotationszentrum des Werkstücks umlaufende Ringnut eingeformt wird. Je nachdem, ob die Schneidplatte beim axialen Einstechen einerseits oder andererseits des Rotationszentrums des Werkstücks angeordnet ist, läuft die sich ergebende Ringnut in die eine oder andere Richtung vom wirksamen Schneidkopf 4 weg. In Figur 6 sind zwei solche Ringnuten 24 (strichpunktiert) und 25 (doppelstrichpunktiert) angedeutet.

Die Schneidplatte 1 kann selbstverständlich nicht nur als Stech- sondern auch als Drehwerkzeug zum Abdrehen eines Werkstücks benutzt werden.

Die beiden Seitenkanten 16, 17 bzw. 18, 19 der Schneidköpfe 4, 5 können als Nebenschneiden ausgebildet sein, die ebenfalls zur spanabhebenden Werkstückbearbeitung eingesetzt werden können.

Damit der jeweils unwirksame Schneidkopf 5 das Einstechen nicht behindert und ohne Berührung der Nutwände in die eingearbeitete Nut eintreten kann, sind die beiden Schneidköpfe 4, 5 um eine in Längsrichtung 6 verlaufende Längsachslinie 26 der Schneidplatte 1 verdreht zueinander an die Mittelpartie 3 angesetzt. Dabei nehmen die Schneidköpfe 4, 5 eine um einen Drehwinkel γ von im wesentlichen 135° versetzte Drehlage zueinander ein. Dementsprechend muß die Schneidplatte 1 beim Vertauschen der Schneidköpfe, d.h. wenn man sie in umgekehrter Lage in den Werkzeughalter 2 einsetzt, so daß der bisher unwirksame Schneidkopf 5 zum wirksamen Schneidkopf 4 wird, gleichzeitig um 135° um die Längsachslinie 26 verdreht werden.

In jeder der beiden Gebrauchslagen der Schneidplatte 1 muß diese in die durch die winkelige Auflagefläche 8 gebildete prismatische Ausnehmung zentriert einsitzen. Hierzu sind an der Außenseite der Schneidplatte 1 ein erstes Paar von Spannflächen 27, 28 und ein zweites Paar von Spannflächen 29, 30 vorhanden, die sich in Längsrichtung 6 erstrecken. Die beiden Spannflächen 27, 28 bzw. 29, 30 jedes Paares stehen in einem dem von der Auflagefläche 8 gebildeten Winkel entsprechenden Winkel ε zueinander, so daß die Schneidplatte 1 mit jedem Spannflächenpaar 27, 28 bzw. 29, 30 in die prismatische Ausnehmung (Auflagefläche 8) am Werkzeughalter 2 paßt. Dabei beträgt der Winkel ε bei der erfindungsgemäßen Anordnung im wesentlichen 90°.

Die beiden Spannflächenpaare 27, 28 und 29, 30 sind um den gleichen Winkel γ von 135° wie die beiden Schneidköpfe 4, 5 in Umfangsrichtung versetzt zueinander angeordnet und sind sich in Umfangsrichtung benachbart, so daß die Spannfläche 28 des einen Paares und die Spannfläche 29 des anderen Paares nebeneinander verlaufen. Dabei bilden diese beiden Spannflächen 28, 29 miteinander einen dem Drehwinkel γ entsprechenden Winkel ϕ von 135°.

Die beiden Spannflächenpaare 27, 28 und 29, 30 erstrecken sich in Längsrichtung 6 über die Schneidplatten-Mittelpartie 3 und außerdem über jeweils einen der beiden Schneidköpfe 4, 5 hinweg. Dabei ist das Spannflächenpaar 27, 28 dem Schneidkopf 4 und das Spannflächenpaar 29, 30 dem Schneidkopf 5 zugeordnet und verläuft bis zur Stirnseite 12 bzw. 13 des jeweiligen Schneidkopfs 4 bzw. 5.

In den beiden Gebrauchslagen sitzt die Schneidplatte 1 jeweils mit dem den jeweiligen wirksamen Schneidkopf erfassenden, d.h. sich in Längsrichtung auch über diesen erstreckenden Spannflächenpaar auf der Auflagefläche 8, d.h. in der dargestellten Gebrauchslage mit dem Spannflächenpaar 27, 28.

Bei jedem Spannflächenpaar verläuft zwischen den beiden Spannflächen 27, 28 bzw. 29, 30 eine Spannflächenkante 31 bzw. 32, die im Querschnitt gesehen zweckmäßigerweise abgerundet ist. In jeder Gebrauchslage bildet die Spannflächenkante 31 bzw. 32 des auf der Auflagefläche 8 sitzenden Spannflächenpaares die Schneidplatten-Unterseite. Im dargestellten Falle handelt es sich um die Spannflächenkante 31.

Die beiden Schneidköpfe 4, 5 weisen, ausgehend vom jeweils zugeordneten Spannflächenpaar 27, 28 bzw. 29, 30, in Richtung der Winkelhalbierenden 34 bzw. 35 zwischen den beiden Spannflächen 27, 28 bzw. 29, 30 gemessen, eine mit Bezug auf den Durchmesser der Mittelpartie 3 kleinere Höhenabmessung 33 auf. Dabei verläuft die stirnseitige Schneide 10 bzw. 11 im wesentlichen quer zu dieser Winkelhalbierenden 34 bzw. 35. Dementsprechend steht auch die Schneidkopf-Oberseite 14 bzw. 15 im wesentlichen rechtwinkelig zur jeweiligen Winkelhalbierenden 34 bzw. 35.

Somit ergibt sich ferner, daß in Längsrichtung, d.h. im Querschnitt gesehen, von jedem Spannflächenpaar 27, 28 bzw. 29, 30 die dem jeweils anderen Spannflächenpaar in Umfangsrichtung zugeordnete Spannfläche 28 bzw. 29 im wesentlichen rechtwinkelig und die dem jeweils anderen Spannflächenpaar abgewandte Spannfläche 27 bzw. 30 im wesentlichen parallel zur stirnseitigen Schneide 11 bzw. 10 des dem anderen Spannflächenpaar zugeordneten Schneidkopfes 5 bzw. 4 angeordnet ist. Die Spannfläche 27 ist also parallel zur Schneide 11 und die Spannfläche 30 parallel zur Schneide 10. Ferner steht die Spannfläche 28 rechtwinkelig zur Schneide 11 und die Spannfläche 29 rechtwinkelig zur Schneide 10.

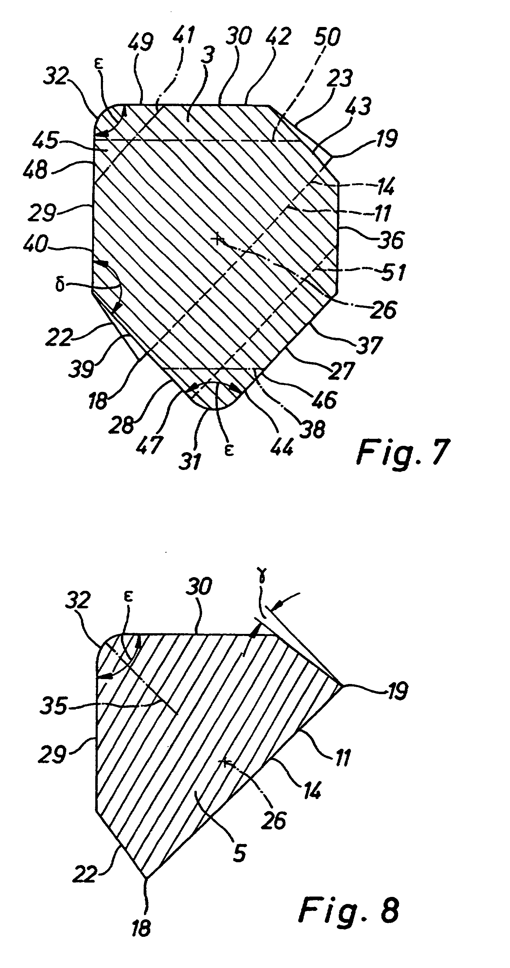

Wie aus der Zeichnung ferner ersichtlich ist (siehe insbesondere Figur 7), weist die Mittelpartie 3 eine sechseckige Querschnittsgestalt auf. Diese Querschnittsgestalt entspricht dem Querschnitt eines Oktaeders mit den Oktaederseiten 36, 37 (wird von einem Teil der Spannfläche 27 gebildet), 38 (strichpunktiert, verläuft im Inneren), 39 (Teil der Spannfläche 28), 40 (Teil der Spannfläche 29), 41 (strichpunktiert, verläuft im Inneren), 42 (Teil der Spannfläche 30) und 43, an den zwei Ergänzungsbereiche 44, 45 angesetzt sind, die jeweils von einem im wesentlichen rechtwinkeligen, gleichschenkeligen Dreieck gebildet werden. Dabei ist der Ergänzungsbereich 44 auf die Oktaederseite 38 und der Ergänzungsbereich 45 auf die Oktaederseite 41 aufgesetzt. Die beiden Schenkel 46, 47 bzw. 48, 49 des jeweiligen Ergänzungsbereichs 44 bzw. 45 bilden Verlängerungen der beiden benachbarten Oktaederseiten 37, 39 bzw. 40, 42. Die beiden Ergänzungsbereiche 44, 45 bilden die beiden Spannflächenkanten 31, 32. Die Oktaederseite 37 ergibt zusammen mit dem Schenkel 46 die Spannfläche 27, die Oktaederseite 39 zusammen mit dem Schenkel 47 die Spannfläche 28, die Oktaederseite 40 zusammen mit dem Schenkel 48 die Spannfläche 29 und die Oktaederseite 42 zusammen mit dem Schenkel 49 die Spannfläche 30.

Der Mittelpunkt des Oktaeders bzw. die in Längsrichtung 6 verlaufende Oktaeder-Mittellinie fällt mit der Längsachslinie 26 zusammen, um die die beiden Schneidköpfe 4, 5 verdreht zueinander angeordnet sind.

Die beiden Schneidköpfe 4, 5 stellen, sieht man bei den Seitenflächen 20, 21, 22, 23 von der Bildung der Winkel β und δ ab, Verlängerungen der Mittelpartie 3 dar, bei denen der der Spannflächenkante 31 bzw. 32 entgegengesetzte obere Bereich entfernt ist, so daß dort die Schneidkopfoberseite mit der Schneide 10 bzw. 11 gebildet wird. Dabei können die Schneidköpfe 4, 5, wie dargestellt, ausgehend von dem jeweiligen Spannflächenpaar 27, 28 bzw. 29, 30 bzw. der Kante 31 bzw. 32, über die Längsachslinie 26 hochstehen, so daß die jeweilige Schneide 10 bzw. 11 sozusagen oberhalb der Mitte der Schneidplatte angeordnet ist.

Die Mittelpartie 3 ist an einer dem einen Spannflächenpaar 27, 28 entgegengesetzten Stelle und an einer dem anderen Spannflächenpaar 29, 30 entgegengesetzten Stelle für den Angriff des Klemmteils 9 ausgebildet. Hierzu weisen die einander abgewandten Spannflächen 27, 30 der beiden Spannflächenpaare 27, 28 bzw. 29, 30 jeweils einen Angriffsbereich in Gestalt einer muldenartigen Einformung 50 bzw. 51 für das Klemmteil 9 auf. Die Einformungen gehen in Querrichtung durch.

In jeder der beiden Gebrauchslagen bildet eine dieser beiden Spannflächen 27, 30 die ebene Oberseite der Mittelpartie 3.

Das Klemmteil 9 kann prinzipiell auf verschiedene Weise gegen die in den Werkzeughalter 2 eingesetzte Schneidplatte 1 gespannt werden. Beim zweckmäßigen Ausführungsbeispiel ist das Klemmteil 9 am vorderen Arm 52 eines zweiarmigen Wippenelements 53 angeordnet, das mittels einer in Querrichtung verlaufenden Schwenkachse 54 verschwenkbar am Werkzeughalter 2 gelagert ist, so daß das Klemmteil 9 auf die Schneidplatte 1 zu und von dieser weg verschwenkt werden kann. Der hintere Arm 55 des Wippenelements 53 wird von einer Spannschraube 56 durchgriffen, die sich in Höhenrichtung erstreckt. Die Spannschraube 56 kann von oben her betätigt werden und stützt sich unten auf dem Werkzeughalter 2 ab. Verdreht man die Spannschraube 56, die mit dem Wippenelement 53 in Gewindeeingriff steht, in dem Sinne, daß sie unter Abstützung am Werkzeughalter 2 den hinteren Arm 55 nach oben drückt, wird das Klemmteil 9 gegen die Schneidplatte 1 gepreßt.

Das Klemmteil 9 stellt einen zur Schneidplatte 1 gerichteten Vorsprung am vorderen Arm 52 dar und weist beim Ausführungsbeispiel eine zu der muldenartigen Einformung 50 bzw. 51 komplementäre Kontur auf, so daß ein formschlüssiger Eingriff erfolgt. Dies könnte prinzipiell jedoch auch anders sein, beispielsweise indem das Klemmteil die Schneidplatte nach hinten unten gegen einen Festanschlag am Werkzeughalter drückt. Eine solche Anordnung geht beispielsweise aus der DE 42 25 822 C1 hervor.

## Patentansprüche

1. An einem Werkzeughalter zwischen einer im Querschnitt satteldachartig winkelig vertieften Auflagefläche (8) und einem Klemmteil (9) in zwei umgekehrten Gebrauchslagen festspannbare Wendeschneidplatte (1) länglicher Gestalt zum spanabhebenden Bearbeiten eines Werkstücks durch Einstechen mittels einer stirnseitigen Schneide (10 bzw. 11), mit einer Mittelpartie (3) und zwei gleichen, in Längsrichtung (6) beiderseits der Mittelpartie (3) angeordneten und um eine in Längsrichtung (6) verlaufende Längsachslinie (26) der Schneidplatte (1) verdreht zueinander an die Mittelpartie (3) angesetzten Schneidköpfen (4, 5), von denen in jeder Gebrauchslage einer wirksam und einer unwirksam ist, und mit zwei sich in Längsrichtung (6) über die Mittelpartie (3) und jeweils einen Schneidkopf (4 bzw. 5) erstreckenden Spannflächenpaaren (27, 28 bzw. 29, 30) an der Außenseite der Schneidplatte (1), die in Umfangsrichtung einander benachbart und um einen dem Drehwinkel zwischen den beiden Schneidköpfen (4, 5) entsprechenden Drehwinkel und die Längsachslinie (26) versetzt zueinander sind und jeweils von zwei der winkeligen Auflagefläche (8) entsprechend winkelig zueinander angeordneten Spannflächen (27, 28) bzw. 29, 30) gebildet werden, so daß die Schneidplatte (1) in ihren Gebrauchslagen mit dem den jeweils wirksamen Schneidkopf (4) erfassenden Spannflächenpaar (27, 28) auf die winkelige Auflagefläche (8) des Werkzeughalters (2) setzbar ist, wobei an den Schneidköpfen (4, 5) die jeweilige stirnseitige Schneide (10, bzw. 11) im wesentlichen quer zur Winkelhalbierenden (34 bzw. 35) des zugehörigen Spannflächenpaares (27, 28 bzw. 29, 30) verläuft und die Mittelpartie (3) an jeweils einem Spannflächenpaar entgegengesetzten Stellen für den Angriff des Klemmteils (9) ausgebildet ist, **dadurch gekennzeichnet, daß** die Schneidköpfe (4, 5), ausgehend vom jeweils zugeordneten Spannflächenpaar (27, 28 bzw. 29, 30), eine mit Bezug auf den Durchmesser der Mittelpartie (3) kleinere Höhenabmessung (33) aufweisen und daß der Drehwinkel zwischen den beiden Schneidköpfen (4, 5) und somit auch der Drehwinkel zwischen den beiden Spannflächenpaaren (27, 28 und 29, 30) im wesentlichen 135° und bei jedem Spannflächenpaar der Winkel zwischen den beiden Spannflächen (27, 28 bzw. 29, 30) im wesentlichen 90° beträgt, so daß in Längsrichtung (6) gesehen von jedem Spannflächenpaar (27, 28 bzw. 29, 30) die dem jeweils anderen Spannflächenpaar zugewandte Spannfläche (28 bzw. 29) im wesentlichen rechtwinkelig und die dem jeweils anderen Spannflächenpaar abgewandte Spannfläche (27 bzw. 30) im wesentlichen parallel zur stirnseitigen Schneide (11 bzw. 10) des dem anderen Spannflächenpaar zugeordneten Schneidkopfes (5 bzw. 4) angeordnet ist, wobei die einander abgewandten Spannflächen (27, 30) jeweils einen Angriffsbereich (51 bzw. 50) für das Klemmteil (9) bilden.

2. Wendeschneidplatte nach Anspruch 1, **dadurch gekennzeichnet, daß** die Querschnittsgestalt der Mittelpartie (3) sechseckig ist und derjenigen eines Oktaeders mit zwei jeweils von einem im wesentlichen rechtwinkeligen, gleichschenkeligen Dreieck gebildeten Ergänzungsbereichen (44, 45) entspricht, die jeweils auf eine Oktaederseite (38 bzw. 41) aufgesetzt sind und mit ihren Schenkeln (46, 47 bzw. 48, 49) Verlängerungen der beiden benachbarten Oktaederseiten (37, 39 bzw. 40, 42) bilden.

3. Wendeschneidplatte nach Anspruch 2, **dadurch gekennzeichnet, daß** die Längsachslinie (26) der Schneidplatte (1) der Oktaeder-Mittellinie entspricht.

4. Wendeschneidplatte nach einem der Ansprüche 1 bis 3, **dadurch gekennzeichnet, daß** die Schneidköpfe (4, 5), ausgehend von dem jeweils zugeordneten Spannflächenpaar, über die Längsachslinie (26) der Schneidplatte (1) hinaus hochsteht.

5. Wendeschneidplatte nach einem der Ansprüche 1 bis 4, **dadurch gekennzeichnet, daß** die einander abgewandten Spannflächen (27, 30) der beiden Spannflächenpaare jeweils eine Einformung (50 bzw. 51) für den Eingriff des Klemmteils (9) enthalten.

6. Wendeschneidplatte nach Anspruch 5, **dadurch gekennzeichnet, daß** die Einformungen quer zur Längsrichtung (6) durchgehend ausgebildet sind.

## Claims

1. A disposable insert (1) of elongated shape which may be clamped to a tool holder in two reversed positions of use between an angular, recessed locating surface (8) with a gable-roof shape, and a clamping section (9), for the metal-removing machining of a workpiece by plunge-cutting by means of a cutting edge (10 or 11) on the end face, with a centre section (3) and two identical cutter heads (4, 5), arranged in the longitudinal direction (6) either side of the centre section (3) and attached to the centre section (3) twisted relative to one another around a longitudinal axis line (26) of the insert (1) running in the longitudinal direction (6), of which in each position of use one is effective and one is ineffective, and with two pairs of clamping faces (27, 28 and 29, 30 respectively) on the outside of the insert (1), extending in the longitudinal direction (6) over the centre section (3) and one cutter head (4 or 5) in each case, adjacent to one another in the circumferential direction and offset relative to one another around an angle of rotation corresponding to the angle of rotation between the two cutter heads (4, 5) and the longitudinal axis line (26), and in each case formed by two clamping faces (27, 28 and 29, 30 respectively) mounted at an angle to one another corresponding to the angular locating surface (8), so that the insert (1) in its positions of use may be placed with the pair of clamping faces (27, 28) holding the respectively effective cutter head (4) on the angled locating surface (8) of the tool holder (2), while at the cutter heads (4, 5) the respective end-face cutting edge (10 or 11) runs substantially at right-angles to the angle bisector (34 or 35) of the associated pair of clamping faces (27, 28 or 29, 30), and the centre section (3) is formed on points for the application of the clamping section (9), each opposite a pair of clamping faces, **characterised in that**, starting from the respectively assigned pair of clamping faces (27, 28 or 29, 30), the cutter heads (4, 5) have a vertical dimension (33) which is less than the diameter of the centre section (3), and that the angle of rotation between the two cutter heads (4, 5) and therefore also the angle of rotation between the two pair of clamping faces (27, 28 or 29, 30) is substantially 135° and for each pair of clamping faces the angle between the two clamping faces (27, 28 or 29, 30) is substantially 90° so that, viewed in the longitudinal direction (6) from each pair of clamping faces (27, 28 or 29, 30), the clamping face (28 or 29) which faces towards the other respective pair of clamping faces is arranged substantially at right-angles to, and the clamping face (27 or 30) facing away from the other respective pair of clamping faces is arranged substantially parallel to the end-face cutter (11 or 10) of the cutter head (5 or 4) assigned to the other pair of clamping faces, while the clamping faces (27, 30) which face away from one another each form an application zone (51 or 50) for the clamping section (9).

2. Disposable insert according to claim 1, **characterised in that** the centre section (3) is hexagonal in cross-section, corresponding in shape to that of an octahedron with two supplementary areas (44, 45), each formed by a substantially right-angled isosceles triangle and each placed on one octahedron side (38 and 41 respectively) to form with their limbs (46, 47 and 48, 49 respectively) extensions of the two adjacent octahedron sides (37, 39 and 40, 42 respectively).

3. Disposable insert according to claim 2, **characterised in that** the longitudinal axis line (26) of the insert (1) corresponds to the octahedron centre line.

4. Disposable insert according to any of claims 1 to 3, **characterised in that** the cutter heads (4, 5), starting from the respectively assigned pair of clamping faces, extend upwards beyond the longitudinal axis line (26) of the insert (1).

5. Disposable insert according to any of claims 1 to 4, **characterised in that** the clamping faces (27, 30) of the two pairs of clamping faces which face away from one another each contain a recess (50 or 51) for the engagement of the clamping section (9).

6. Disposable insert according to claim 5, **characterised in that** the recesses are continuous at right-angles to the longitudinal direction (6).

## Revendications

1. Plaquette de coupe réversible (1) de forme allongée pouvant être fixée, dans deux positions de fonctionnement opposées, sur un porte-outil entre une surface d'appui (8) évidée de façon angulaire pour que sa section transversale présente la forme d'un toit à deux pentes et une pièce de serrage (9) destinée à usiner, par enlèvement de copeaux, une pièce à usiner par plongée au moyen d'un tranchant frontal (10 et/ou 11), comprenant une partie médiane (3) et deux têtes de coupe (4, 5) identiques disposées, dans la direction longitudinale (6), de part et d'autre de la partie médiane (3) et placées, l'une vis-à-vis de l'autre, en torsion sur la partie médiane (3), autour d'une ligne formant axe longitudinal (26), s'étendant dans la direction longitudinale (6), de la plaquette de coupe, têtes dont l'une est active et l'autre inactive dans chaque position de fonctionnement, et comprenant deux paires de surfaces de serrage (27, 28 et/ou 29, 30) s'étendant, sur la face externe de la plaquette de coupe (1), dans la direction longitudinale (6), au-dessus de la partie médiane (3) et de l'une des têtes de coupe (4 et/ou 5), paires de surfaces de serrage qui sont voisines l'une de l'autre dans la direction circonférentielle, et décalées l'une par rapport à l'autre suivant un angle de rotation correspondant à l'angle de rotation entre les deux têtes de coupe (4, 5) et suivant la ligne formant axe longitudinal (26) et sont chacune formées de deux des surfaces de serrage (27, 28 et/ou 29, 30) disposées, pour correspondre à la surface d'appui (8) angulaire, en formant un angle entre elles, de sorte que la plaquette de coupe (1) puisse être positionnée, dans ses positions de fonctionnement, avec la paire de surfaces de serrage (27, 28) qui saisit la tête de coupe (4) respectivement active, sur la surface d'appui (8) angulaire du porte-outils (2), le tranchant frontal (10 et/ou 11) présent sur les têtes de coupe (4, 5) s'étendant sensiblement perpendiculairement aux bissectrices (34 et/ou 35) de la paire de surfaces de serrage (27, 28 et/ou 29, 30) correspondante, et la partie médiane (3) étant prévue en des points situés en regard d'une paire de surfaces de serrage, pour la mise en prise de la pièce de serrage (9), **caractérisée en ce que** les têtes de coupe (4, 5), à partir de la paire de surfaces de serrage (27, 28 et/ou 29, 30) qui leur est associée, présentent une hauteur (33) inférieure au diamètre de la partie médiane (3) et **en ce que** l'angle de rotation entre les deux têtes de coupe (4, 5) et, par conséquent, également l'angle de rotation entre les deux paires de surfaces de serrage (27, 28 et/ou 29, 30) est de sensiblement 135° et, pour chaque paire de surfaces de serrage, l'angle entre les deux surfaces de serrage (27, 28 et/ou 29, 30) est de sensiblement 90°, de sorte que, vu dans la direction longitudinale (6), parmi chaque paire de surfaces de serrage (26, 27 et/ou 29, 30), la surface de serrage (28 et/ou 29) qui est respectivement orientée vers l'autre paire de surfaces de serrage est sensiblement disposée à angle droit, et que la surface de serrage (27 et/ou 30) respectivement opposée à l'autre paire de surfaces de serrage est sensiblement disposée parallèlement au tranchant frontal (11 et/ou 10) de la tête de coupe (5 et/ou 4) qui est associée à l'autre paire de surfaces de serrage, les surfaces de serrage (27, 30) opposées l'une à l'autre formant chacune une zone d'attaque (51 et/ou 50) pour la pièce de serrage (9).

2. Plaquette de coupe réversible selon la revendication 1, **caractérisée en ce que** la section transversale de la partie médiane (3) est de forme hexagonale et correspond à celle d'un octaèdre avec deux zones complémentaires (44, 45) formées chacune d'un triangle sensiblement triangle-rectangle isocèle, qui sont placées chacune sur un côté de l'octaèdre (38 et/ou 41) et qui forment, avec leurs branches (46, 47 et/ou 48, 49), des extensions des deux côtés voisins de l'octaèdre (37, 39 et/ou 40, 42).

3. Plaquette de coupe réversible selon la revendication 2, **caractérisée en ce que** la ligne formant axe longitudinal (26) de la plaquette de coupe (1) correspond à la ligne médiane de l'octaèdre.

4. Plaquette de coupe réversible selon l'une quelconque des revendications 1 à 3, **caractérisée en ce que** les têtes de coupe (4, 5), à partir de la paire de surfaces de serrage qui leur est associée, sont placées au-dessus de la ligne formant axe longitudinal (26) de la plaquette de coupe (1).

5. Plaquette de coupe réversible selon l'une quelconque des revendications 1 à 4, **caractérisée en ce que** les surfaces de serrage (27, 30) opposées l'une à l'autre (27, 30) des deux paires de surfaces de serrage contiennent chacune une découpe (50 et/ou 51) pour la mise en prise de la pièce de serrage (9).

6. Plaquette de coupe réversible selon la revendication 5, **caractérisée en ce que** les découpes sont continues, perpendiculairement à la direction longitudinale (6).
